Europäisches Patentamt

(19) European Patent Office

Office européen des brevets

(11) Publication number: **O OO1 O11**
**B1**

(12) **EUROPEAN PATENT SPECIFICATION**

(21) Application number: **78300310.6**

(22) Date of filing: **21.08.78**

(51) Int. Cl.³: **B 29 C 3/00**

(54) Improvements in or relating to moulding machines.

(30) Priority: **24.08.77 GB 3547977**

(43) Date of publication of application:
**07.03.79 Bulletin 79/5**

(45) Publication of the grant of the European patent:
**11.02.81 Bulletin 81/6**

(84) Designated Contracting States:
**BE DE FR GB NL SE**

(56) References cited:
**FR - A - 1 160 768**
**FR - A - 1 175 414**
**GB - A - 1 052 890**
**US - A - 2 447 415**
**US - A - 2 452 382**
**US - A - 2 772 012**
**US - A - 2 876 492**
**US - A - 3 154 618**
**US - A - 3 997 286**

(73) Proprietor: **BRITISH INDUSTRIAL PLASTICS
LIMITED**
**20 St. Mary's Parsonage**
**Manchester M3 2NL (GB)**

(72) Inventor: **Hewitt, Malcolm**
**3 Honiton Way**
**Aldridge West Midlands (GB)**

(74) Representative: **Wetters, Basil David Peter et al,**
**20 St. Mary's Parsonage**
**Manchester M3 2NL (GB)**

Courier Press, Leamington Spa, England.

# Improvements in or relating to moulding machines

## Technical field

This invention relates to compression moulding presses and in particular to such presses capable of being used to mould materials which tend to release air and/or volatiles in gaseous or vapour form when subject to heat and pressure. For example, the compression moulding of rubbers and some thermoset resin materials is made difficult by virtue of air trapped in the mould and/or volatiles evolved in the vulcanising and or curing process.

## Background art

Attempts to deal with trapped air and/or these volatile products of the moulding process by enclosing the moulding tool in a box constituted by sliding and pivoting sidewalls have been only moderately satisfactory, mainly due to their complexity and to premature failure of the necessary resilient seals.

Compression moulding presses well-known in the moulding art and can be diverted in very general terms into two classes, although their principle of operation is essentially the same. A rigid supporting framework incorporates a fixed platen and a moving platen which is displaceable towards and away from the fixed platen for example by means of a hydraulic ram or screw jack. The two platens are adapted to each carry one half of a moulding tool, the arrangement being such that displacement of the moving platen towards the fixed platen brings together the moulding tool halves so as to define a moulding cavity between them.

The moving platen is usually arranged to move in a vertical path; the means for displacing it relative to the fixed platen may be above the moving platen, in which case the press is of the downstroking class, or it may be below the moving platen, in which case the press is of the upstroking class. The present invention can be adapted to either class of press. Examples of upstroking presses are found in the US patents 3997286 and 2542874. Downstroking presses are generally similar, but have the platen means displacing at the top of the framework, the fixed platen being therefore in the position occupied by the main ram assembly shown in the two patents just referred to.

Examples of compression moulding presses provided with vacuum chambers operable to enclose the moulding tool for removal of air and/or volatiles are found in the US patents 2772012 and 2452382. Both of these patents show the use of a spring loaded vacuum box which is constructed as an integral part of a moulding tool half. In use, these give minimal access to one of the tool halves when the press is open. Furthermore, the constructions used call for the whole of the pressing area to be heated, including the vacuum box and its seals.

US Patent 2447415 shows a press for flattening plastics sheet to a desired quality of surface finish. It is not a conventional compression moulding press, but it does provide for limited evacuation of the pressing area by means of a double piston system in which air is transferred from a pressing chamber to an upper chamber as the press head closes onto a sheet to be pressed. Raising the press head causes air to return to the pressing chamber, thereby at least hindering the further removal of air and/or volatiles released from the sheet being pressed.

It is an object of the present invention to provide an improved compression moulding press in which the disadvantages of the prior art presses are at least significantly reduced.

## Disclosure of the invention

According to the present invention, a compression moulding press of the kind having fixed and moving platens with fixed and moving tool portions thereon provided with a mould cavity or cavities defined between the tool portions, together with vacuum box means operable to enclose the tool portions and means for removing air from the mould cavity prior to and/or during moulding, is characterised in that said vacuum box means is constituted by an independently-operable, one-piece shroud member which is open at both ends and freely slidable around one of said platens in sealing but otherwise wholly independent relation thereto towards and into sealing relationship with other of said platens.

Preferably, the shroud member is arranged to slide around the fixed platen, a continuous piston seal being provided around the lateral margin of the latter, the moving platen having a face seal disposed to meet the opposed face of the shroud. Conveniently, the shroud member is operated by a piston and cylinder device, for example, by at least one pneumatic or hydraulic ram, preferably of the double-acting kind. Advantageously, at least two rams are provided and disposed to apply pressure evenly around the periphery of the shroud. Where hydraulic rams are employed, they are preferably operated by the machine hydraulic system and it is preferred that their operation be controlled by the machine control system, particularly where the latter is programmable to operate the machine substantially automatically.

It will be understood that for a substantially closed chamber to be formed on sliding the shroud member both platens must be made impervious, for example, by blanking-off all the ejector holes not used for a particular tool. Of course, a vacuum connection must be provided and it is preferred that this be through one of the platens.

Because only two single seals are used, one of which is a butt or face seal and the other an enclosed seal of the sliding, piston kind, the risk of in use damage to either seal is minimal. Neither seal has to resist abrasion caused by engagement with sharp edges; the face seal in particular is easy to inspect for wear and to replace, if necessary.

Advantageously, at least one of the tool portions is heated, induction heating being the preferred means for this. Most preferably, the seals are also thermally insulated from the tool portions so as to minimise heat transfer to them. It has been found that this very greatly enhances the useful working life of the seals, even when the press is used to carry out relatively high temperature compression moulding operations. As will shortly be described with reference to the drawings of the preferred embodiments, this insulation is conveniently accomplished by using platens which comprise tables and induction heated supports for the tool portions, the supports being insulated from the tables. As the shroud slides around the table part of the platen, the seals are thereby kept away from direct contact with the heat source.

Because the shroud member slides independently of and around one platen, it is possible to at least partly separate the moulding tool halves without opening the closed chamber. It is therefore possible to allow a moulding to "breathe", i.e. to release evolved volatiles into the chamber; an at least partial vacuum developed in the chamber will facilitate this release.

*Description of preferred embodiments*

In order that the invention be better understood one preferred embodiment of it will now be described by way of example with reference to the accompanying drawings in which

Figure 1 is a schematic front view, partly in section, through a compression moulding press according to the invention,

Figure 2 is a side view of the press of Figure 1, and

Figure 3 is a fragmentary, partly sectional view of part of the press of Figure 1, on an enlarged scale.

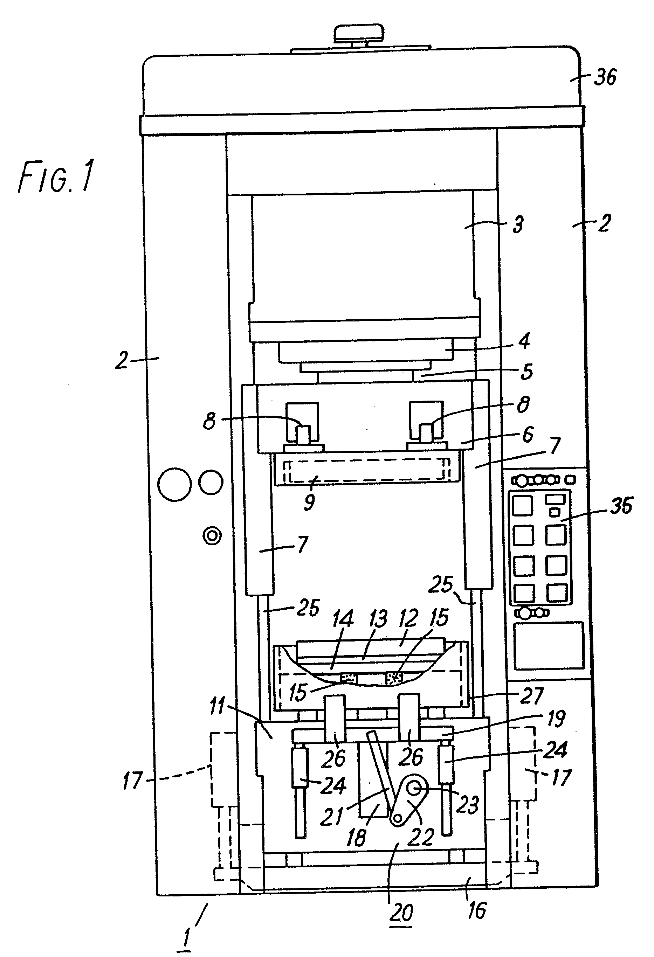

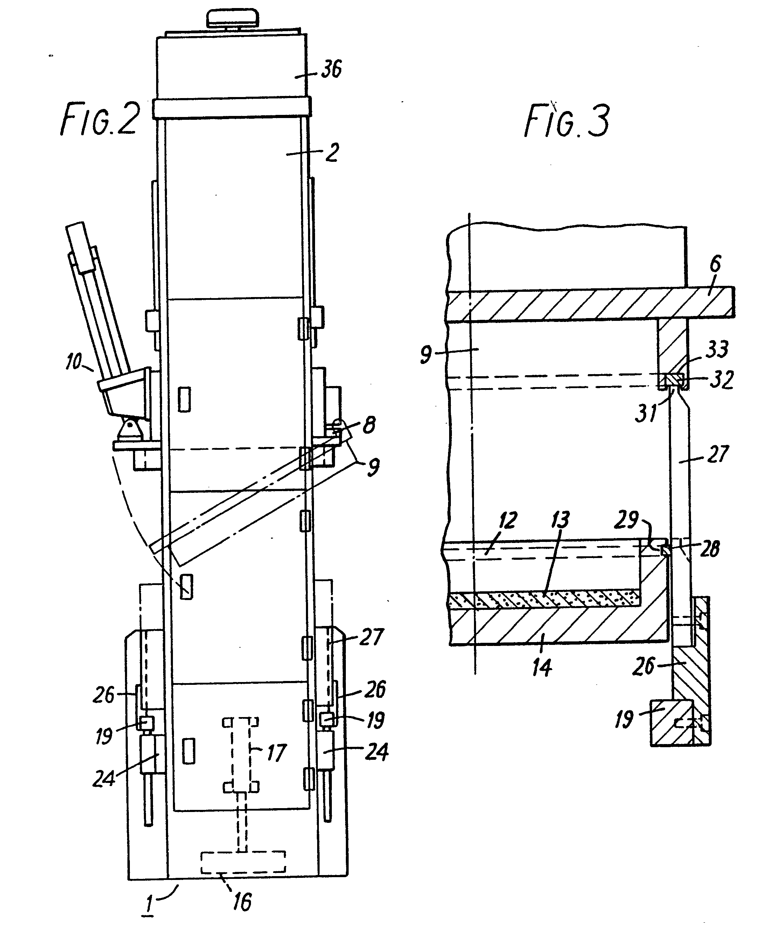

In Figures 1 and 2, a base 1 supports main frame members 2 carrying between them at their upper end a cylinder frame 3 comprising a hydraulic cylinder 4 and a ram 5.

The ram 5 supports a moving platen 6 which is located at its edges by V-slides 7. Hinged to the underside of the platen 6 by hinges 8 is a tilting table 9 which in use carries half (the upper half) of a moulding tool (not shown). A hydraulic actuator and safety mechanism 10 (seen only in Figure 2) is provided to tilt the table 9; this feature is used to facilitate stripping/cleaning the tool without an operative having to reach too far into the hot press. Stop blocks 25 are provided to limit the downward travel of the moving platen 6. These blocks extend upwardly from a lower support 11. Mounted below the moving platen 6 on the support 11 fixed to the base 1 is fixed platen comprising an assembly of an induction heated support 12, a layer of thermal insulation 13 and a bottom table 14, all of which stand on stool bars 15. Centrally of the press is a conventional ejector beam 16 operating ejectors (not shown) for the mouldings produced, the ejector beam being itself operated by ejector rams/cylinders 17.

Also within the lower part of the press are a pair of shroud member actuator cylinders 18 one only of which is seen in the figure. These are arranged to lift two members 19 which are linked together by a synchronising linkage 20 comprising arms 21, 22 and a shaft 23. The precise attitude of the members 19 is stabilised by guide bars/bushes 24 so that member 19 moves only in a controlled, essentially-vertical path. Supported by the members 19 through couplings 26 is a movable shroud member 27, as shown in operation in Figure 3.

The shroud member completely surrounds the fixed platen and is constituted by a hollow box open at two opposite ends. Referring to Figure 3, the shroud slides around the lateral rim of the bottom table 14 of the platen a circumferential piston seal 28 being provided in a recess 29 in said lateral rim of the bottom table 14. As shown in Figure 3, the shroud member is advanced to meet the upper, moving platen 6 and its upper rim 31 abuts against a face seal 32 set in a recess 33 in the face of this platen. Because both seals extend around the full circumference of the shroud member, the latter completely encloses the tool area 34, defining thereby a substantially closed chamber around the tool area. Furthermore closing the tool with the main ram 5 enhances the seal produced, since the main ram merely pushes the shroud downwardly with the moving platen against the force exerted by the shroud member actuator cylinder 18. It is also possible to at least partly open the tool without breaking the seal, because as long as the cylinder 18 is pressurised, the shroud member will simply follow the moving platen upwardly to the limit of its travel, as determined by the shroud member actuating mechanism described earlier.

It will be appreciated that the platens must be sensibly impervious and that a vacuum connection must be made through one of them although this is not shown in the Figures. For example, the bottom table 14 of the fixed platen can beforeed to receive a vacuum pipe which communicates with the tool area through the insulation layer 13 and the induction heated support 12. Ancillary bores in the table 14 will be provided to accommodate power cables to the induction heating coils. These cables where they pass through the platen take the form of short lengths of mineral insulated, metal jacketed cable, installed using compression fittings to obtain a tight seal in the bores.

Because the press, apart from the shroud members and associated mechanism and seals is largely conventional, it will not be further described here, except to say that a normal electrical control unit 35 is fitted to operate the press substantially automatically through control of the press hydraulic system, which includes all the rams and associated parts and the oil reservoir 36 on top of the frame.

## Claims

1. A compression moulding press of the kind having fixed and moving platens with fixed and moving tool portions thereon provided with a mould cavity or cavities defined between the tool portions, together with vacuum box means operable to enclose the tool portions and means for removing air from the mould cavity prior to and/or during moulding, characterised in that said vacuum box means is constituted by an independently-operable, one-piece shroud member which is open at both ends and freely slidable around one of said platens in sealing but otherwise wholly independent relation thereto towards and into sealing relationship with the other of said platens.

2. The compression moulding press of claim 1, characterised in that the shroud is disposed to slide around the fixed platen.

3. The compression moulding press of claim 2 further characterised in that a continuous piston seal is provided around the margin of the fixed platen, and the moving platen has a face seal disposed to meet the opposed face of the shroud.

4. The compression moulding press of claim 3, further characterised in that the tool portions are heated and that said seals are thermally insulated therefrom.

5. The compression moulding press of claim 4, further characterised in that the tool portions are heated by induction heating.

6. The compression moulding press of claim 4 or claim 5, characterised in that the tool portions are thermally insulated from the platens.

7. The compression moulding press of claim 6, characterised in that the platens comprise tables and induction heated supports for the tool portions the supports being insulated from the tables so as to minimise heat transfer from the supports to the tables.

## Revendications

1. Presse de moulage par compression du genre comportant des plateaux fixe et mobile portant des pièces de moule fixe et mobile qui définissent entre elles une ou plus d'une empreinte, ainsi qu'une boîte à vide servant à enfermer les pièces de moule et que des moyens permettant d'éliminer l'air de l'empreinte avant et/ou pendant moulage, caractérisée en ce que ladite boîte à vide est constituée par une enveloppe à commande indépendante, réalisée d'un seul tenant et ouverte aux deux extrémités, qui coulisse librement autour de l'un desdits plateaux -avec lequel elle est en contact étanche, mais dont elle est par ailleurs complètement indépendante- pour se rapprocher de l'autre desdits plateaux et entrer en contact étanche avec lui.

2. Presse de moulage par compression selon la revendication 1, caractérisée en ce que l'enveloppe est disposée de façon à glisser autour du plateau fixe.

3. Presse de moulage par compression selon la revendication 2, caractérisée en ce qu'un joint de piston continu entoure le bord du plateau fixe, et en ce que le plateau mobile comporte un joint frontal ou de butée disposé de façon à rencontrer la tranche d'enveloppe située en regard.

4. Presse de moulage par compression selon la revendication 3, caractérisé en ce que les pièces de moule sont chauffées et en ce que lesdits joints sont thermiquement isolés des pièces de moule.

5. Presse de moulage par compression selon la revendication 4, caractérisée en ce que les pièces de moule sont chauffées par chauffage par induction.

6. Presse de moulage par compression selon la revendication 4 ou 5, caractérisée en ce que les pièces de moule sont thermiquement isolées des plateaux.

7. Presse de moulage par compression selon la revendication 6, caractérisée en ce que les plateaux sont constitués par des tables et par des supports de pièce de moule chauffés par induction, ces cupports étant isolés des tables pour minimiser la transmission de chaleur des supports aux tables.

## Patentansprüche

1. Formpresse mit festen und beweglichen Platten und darauf befindlichen festen unde beweglichen Werkzeugteilen, die einen oder mehrere von den Werkzeugteilen umgrenzte Formhohlräume aufweist, mit einer Vakuumkammervorrichtung, die zum Umschließen der Werkzeugteile betätigbar ist, und mit einer Vorrichtung zum Abziehen von Luft aus dem Formhohlraum vor und/oder während des Formvorganges, dadurch gekennzeichnet, daß die Vakuumkammervorrichtung von einem unabhängig betätigbaren, einstückigen Ummantelungselement gebildet ist, das an beiden Enden offen und um eine der Platten herum in einer hierzu abdichtenden doch ansonsten völlig unabhängigen Beziehung zu der anderen Platte hin in eine abdichtende Bezeihung zu dieser frei verschieblich ist.

2. Formpresse nach Anspruch 1, dadurch gekennzeichnet, daß die Ummantelung so angeordnet ist, daß sie um die feste Platte herum verschieblich ist.

3. Formpresse nach Anspruch 2, dadurch gekennzeichnet, daß eine ununterbrochene Kolbendichtung um den Rand der festen Platte herum vorgesehen ist, und daß die bewegliche Platte eine Flächendichtung aufweist, die so angeordnet ist, daß sie auf die gegenüberliegende Fläche der Ummantelung auftrifft.

4. Formpresse nach Anspruch 3, dadurch gekennzeichnet, daß die Werkzeugteile geheizt sind und daß die Dichtungen von ihnen thermisch isoliert sind.

5. Formpresse nach Anspruch 4, dadurch gekennzeichnet, daß die Werkzeugteile durch Induktionsheizung geheizt sind.

6. Formpresse nach Anspruch 4 oder 5, dadurch gekennzeichnet, daß die Werkzeugteile thermisch von den Platten isoliert sind.

7. Formpresse nach Anspruch 6, dadurch gekennzeichnet, daß die Platten Tische und induktionsgeheizte Träger für die Werkzeugteile umfassen, wobei die Träger von den Tischen wärmemäßig isoliert sind, um die Wärmeübertragung von den Trägern auf die Tische möglichst klein zu halten.

FIG.1

FIG.2

FIG.3